# EUROPEAN PATENT SPECIFICATION

(11) **EP 0 745 321 B1**
(45) Date of publication and mention of the grant of the patent: **09.09.1998**
(21) Application number: 96107705.4
(22) Date of filing: 14.05.1996
(51) Int. Cl.: A01G 25/00

(54) **Distillation irrigation apparatus**
Destillations- und Bewässerungsapparat
Appareil de distillation et d'irrigation

(30) Priority: 02.06.1995 JP 159887/95
(43) Date of publication of application: 04.12.1996
(73) Proprietor: ISHIMOTO AGRI-TECH RESEARCH Corp., Chuo-ku, Tokyo 103 (JP)
(72) Inventor: Ishimoto, Shoichi, Chuo-ku, Tokyo 103 (JP)
(74) Representative: Laufhütte, Dieter, Dr.-Ing.

(56) References cited:
- US-A- 4 141 798
- US-A- 4 178 715
- US-A- 4 292 136
- US-A- 4 578 898
- US-A- 5 067 272

## Description

### BACKGROUND OF THE INVENTION

### Field of the Invention:

The present invention relates to a distillation irrigation apparatus having an excellent efficiency of water usage, and particularly to a distillation irrigation apparatus which can perform irrigation using a small amount of water and which allows the use of water containing much salt and/or solid matter as irrigation water.

### Description of the Related Art:

In recent years, the world population has shown a tendency of sharp increasing while yield of crops per unit area has been leveling off. Under such circumstances, a food shortage will be a significant global problem in the near future.

In order to increase yield of crops, it is necessary to expand farmlands. However, it is considered that lands which will be reclaimed in future will have severe conditions for cultivation. For example, so-called "slash-and-burn" agriculture through deforestation degrades an air cleaning function of the earth, particularly the function of reducing the global carbon dioxide concentration.

Accordingly, it becomes necessary in future to reclaim barren lands in a region having very little rain. Cultivation in a region having very little rain needs irrigation. According to usual practice, farmlands are irrigated through waterways and gutters connected to a reservoir.

However, this method involves a large consumption of water, which is infeasible in a region having very little rain. Also, when cultivation is performed in desertified land containing much salt, salt contained in the land must be washed off using a large amount of water. In this case, water which has washed off salt penetrated into soil and contains the salt rises through the soil due to capillarity, followed by evaporation. This results in concentrated salt on the surface of soil, making the land inadequate for farming due to possible salt damage.

To avoid the salt problem, a pipe having small holes is laid along a ridge in a farmland, so that crops are fed through the holes with minimum water required for their growth. This method is referred to as "dripping irrigation". "Dripping irrigation" offers advantages such as lower consumption of water and shallow penetration of water into soil, which means that less salt, together with water, rises through the soil.

However, conventional "dripping irrigation" presents a problem that if water which contains solid matter is used for irrigation, small holes in a pipe tend to become clogged with solid matter.

Even this method cannot avoid the salt problem when irrigation water contains much salt. For use of irrigation water containing much salt the U.S. patent 4,292,136 discloses a device for desalting brackish or sea water using solar energy. The apparatus includes a greenhouse structure over a canal or equivalent structure fed with sea or brackish water for evaporation and a structure for condensation and collection of softwater comprising another canal structure. While the greenhouse structure acts as an evaporation unit the other structure is representing a cold source for condensating the evaporized water. Both structures are in contact by means of pipes in which water loaded air is fed to the condensating unit.

Another apparatus for preparing distilled water by desalination of raw water is disclosed in U.S. patent 4,141,798. A pair of parallel dikes are separated by a ditch which is covered by a first sheet while a second sheet is overlying the first sheet thus defining a tent-like structure. Both sheets are positioned in a spaced relation with the first sheet receiving the raw water and the second sheet serving as a cover and collector for evaporated water. After evaporation, the water is condensed at the surface of the second sheet and fed to troughs which are positioned at both sides of the dikes. A similar apparatus is described in U.S. patent 5,067,272 which uses the second sheet for directly feeding the distilled water into the adjacent soil.

The use of diffuser tubes for water recovery due to evaporation of water is proposed in U.S. 4,578,898. The diffuser tubes are extending into a soil bed which is spaced apart from a lagoon of saline water. After permeation of liquid vapor into the diffuser tubes and decrease of temperature at dusk the liquid vapor is entrapped in a soil bed and finally condenses.

The above described methods include complex desalination devices and are therefore costly or difficult to handle or to assemble especially if large areas are to be irrigated.

### SUMMARY OF THE INVENTION

In view of the foregoing, it is an object of the present invention to provide a simple and effective distillation irrigation apparatus which can efficiently perform irrigation using a small amount of water and which allows the use of water containing much salt and/or solid matter as irrigation water.

Novel features of the present invention will be described in detail in the accompanying claims. The present invention itself, and other objects and advantages of the present invention will become more apparent from the following description of the present invention and preferred embodiments thereof.

### BRIEF DESCRIPTION OF THE DRAWINGS

FIG. 1 is an exploded perspective view showing an embodiment of the distillation irrigation apparatus according to the present invention;
FIG. 2 is a cross-sectional view of the apparatus of FIG. 1 in a used state;
FIG. 3 is a cross-sectional view showing another embodiment of the distillation irrigation apparatus according to the present invention in a used state;
FIG. 4 is a partial enlarged cross-sectional view showing another embodiment of the third means;
FIG. 5 is a partial cut-away perspective view of a water storage portion;
FIG. 6 is an explanatory chart illustrating variations in water depth of a watercourse;
FIG. 8 is a cross-sectional view of a distillation irrigation apparatus according to another embodiment of the present invention;
FIG. 9 is a cross-sectional view of a distillation irrigation apparatus according to still another embodiment of the present invention;
FIG. 10 is a partial cross-sectional view of means for increasing yield of distilled water;
FIG. 11 is a cross-sectional view of an improved embodiment of the distillation irrigation apparatus of FIG. 9;
FIG. 12 is a schematic cross-sectional view of an embodiment of a fourth means;
FIG. 13 is partially cut-away perspective view of an improved gutter member for feeding distilled water through inner part of soil;
FIG. 14 is a partial cross-sectional view illustrating an application of the gutter member of FIG. 13; and
FIG. 15 is a cross-sectional view of another embodyment of the fourth means.

### DESCRIPTION OF THE INVENTION AND PREFERRED EMBODIMENTS

The present invention will now be described.

A first means of the present invention has a structure to raise, by utilizing heat of sunlight, the density of water vapor contained in the air within a substantially closed space formed above raw water.

Raw water may contain salt and/or solid matter. Examples of raw water include salt lake water, seawater, and muddy water. The present invention allows these kinds of water to be used as irrigation water.

The closed space does not necessarily mean a completely closed space, but may be a space which has a relatively high water vapor density raised by heat of sunlight through not releasing water vapor therefrom.

A member which forms the upper portion of the closed space may be light-nontransmissive or light-transmissive. When the upper portion of the closed space is formed of a light-nontransmissive member, the member preferably has a color suited for absorbing heat of sunlight, as well as good heat conduction.

When the upper portion of the closed space is formed of a light-transmissive member, sunlight directly heats raw water. Accordingly, the surface of a watercourse or the like where raw water is present is preferably colored so as to reliably absorb heat of sunlight.

Raw water may flow through a watercourse, may be stationarily stored in a tank or the like, or may be held in a water-holding material.

When raw water flows through a watercourse, the watercourse may run horizontally, rise and fall, or run in a stepped form.

Since the depth of raw water in the distillation irrigation apparatus affects the temperature rise due to the sunlight, the raw water preferably has a small depth.

The second means of the present invention has a structure to cool the air within the closed space so as to condense water vapor into waterdrops or water film, whereby distilled water is obtained.

The outside air is used to cool the exterior surface of a light-transmissive covering material, which covers the space above raw water, so as to hinder from rising the temperature of the covering material. Thus, the interior surface of the covering material is maintained at a relatively low temperature, so that water vapor condenses into waterdrops or water film on the surface, thereby producing distilled water.

In order to increase the amount of thus produced distilled water, the second means preferably has the following:
(1) means for increasing the area for producing distilled water;
(2) aquatic plants which grow in raw water; and
(3) a water-holding material for increasing the contact area between the air and raw water within the closed space.

Hereinafter, the contact area between the air and raw water within the closed space is referred to as "the water surface area of raw waters." These means listed above may be employed individually or in combination. Embodiments of the above-mentioned means for increasing the amount of distilled water to be produced will be described later.

A third means of the present invention has a structure to lead out produced distilled water from inside the closed space. A fourth means of the present invention has a structure to feed distilled water to the roots of plants being grown. The third and fourth means may have various forms. Generated distilled water may be continuously and directly fed to plants or may be stored in a tank before being fed to plants.

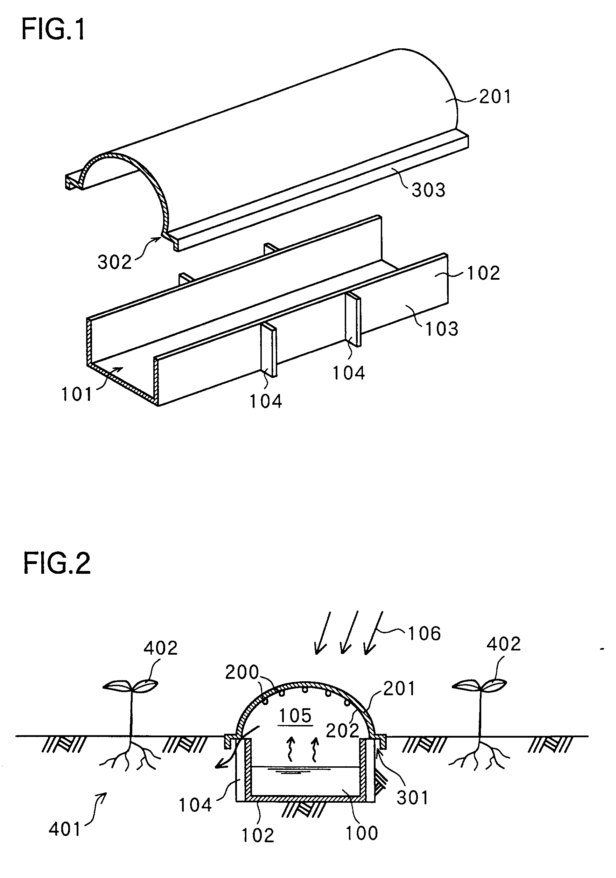

An embodiment of the distillation irrigation apparatus according to the present invention will now be described with reference to FIGS. 1 and 2. In FIGS. 1 and 2, reference numeral 101 denotes a watercourse in which raw water is present and which is formed inside a water impermeable gutter member 102. Reference numeral 201 denotes a cover made of a light-transmissive covering material which covers a space above the gutter member 102.

The gutter member 102 is preferably an elongated member having a cross-section shaped like a squarish letter U, as shown in FIGS. 1 and 2. In FIGS. 1 and 2, ribs 104 are vertically projected from an exterior surface 103 of the gutter member 102. The shape of the gutter member 102 is not limited to the shape shown in FIGS. 1 and 2, and the gutter member 102 may have a semicircular cross-section or any other shape of cross-section so long as it allows raw water to be present therein.

The gutter member 102 may be made of any impermeable, water resistant, salt resistant (if raw water contains salt) material, usually metal, concrete, porcelain, ceramics, or plastics. Examples of such plastics include polyvinyl chloride, polyester, high-density polyethylene, and polypropylene. Preferably, at least the interior surface of the gutter member 102 is of a color, usually black, which well absorbs heat of sunlight. Alternatively, impermeable film of a color having a good heat absorbing property may be laid on the interior surface of the gutter member 102.

The cover 201 is made of a light-transmissive material such as plastic, polyvinyl chloride, polyester, polyacryl, polystyrene, and polypropylene.

In FIG. 2, the second means is embodied within the closed space 105.

Raw water 100 present in the gutter member 102 is warmed by sunlight 106 and evaporates accordingly within the closed space 105. Since the exterior surface of the cover 201 is in contact with the outside air, temperature of the cover 201 is hindered from rising and thus lower then that of the space 105. Thus, upon contacting an interior surface 202 of the cover 201, water vapor contained in the space 105 condenses into water droplets or film to form condensate water 200, which is distilled water.

In order to form an elongated watercourse, a plurality of gutter members 102 are connected to one another while their end connections are properly treated to avoid water leakage, as follows: their corresponding ends are fused, bonded using hot melt of resin of the same or similar kind, or joined using adhesive tape. In addition, if an impermeable film is laid inside the gutter member 102, water leakage will be prevented even when no connection is properly made.

The distillation irrigation apparatus is installed through the steps of digging a ditch in land, laying the gutter member 102 in the ditch, providing the cover 201 on the gutter member 102, and refilling earth along both sides of the gutter member 102 to embed the gutter member 102. An actual installation form of the apparatus depends on its shape.

The distillation irrigation apparatus has an advantage that it can be laid along a ridge in a farmland and that it can feed water to farmland from a waterway extending from a river.

The cover 201 may be of a film which not only covers the gutter member 102 from above but also extends beyond both side edges of the gutter member 102 onto the soil surface. Alternatively, an impermeable film may be laid on the interior surface of the cover 201 while the film may extend onto the soil surface.

A water outlet portion 301 which constitutes the third means has a structure as shown in FIGS. 1 and 2 in that a step-like coupling portion 303, which is provided at each side edge 302 of the cover 201, rests on the ribs 104 of the gutter member 102 to form a clearance between the top edge of each side wall of the gutter member 102 and the interior surface of the cover 201.

The water outlet portion 301 is not limited to the shape described above, but may have various other shapes depending on the shape of the gutter member 102 and that of the cover 201.

Distilled water released through the water outlet portion 301 is fed to the roots of plants 402 to be grown, through the fourth means. In FIG. 2, distilled water moves horizontally through soil 401 due to capillarity.

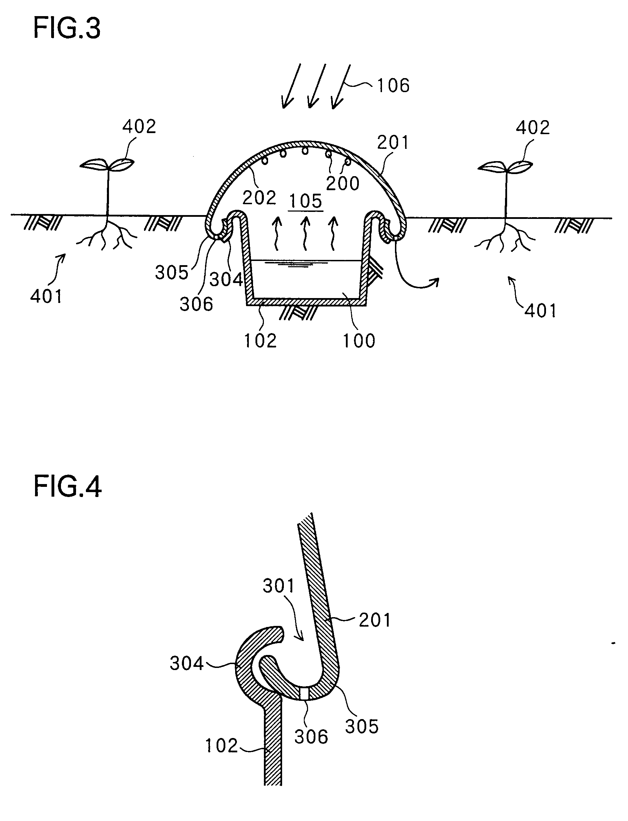

Other embodiments of the gutter member 102 and the cover 201 will now be described with reference to FIG. 3. As shown in FIGS. 3 and 4, the top edge portion of each side wall of the gutter member 102 is curved outwardly and/or inwardly to form a curl portion 304 of the gutter member 102 while each side edge portion of the cover 201 is curved inwardly to form a curl portion 305 of the cover 201. Small holes 306 for leading distilled water out of the closed space 105 are formed in the curl portion 305. Because of elastic coupling between the curl portions 304 and 305, the cover 201 is easy to be attached to and detached from the gutter member 102. In addition, such structure of the water outlet portion 301 prevents the cover 201 from being blown off by wind.

Further, the water outlet portion 301 may have a structure in which at least both side wall edges of the gutter member 102 are formed in waves to form clearances between each of the side wall edges of the gutter member 102 and the cover 201. Alternatively, at least both side edges of the cover 201 are formed in waves to form clearances between each of the side wall edges of the gutter member 102 and the cover 201.

When the distillation irrigation apparatus of the present invention is installed in a sloped land, weirs may be provided at certain intervals in the watercourse 101. The weir may have a structure in which its top is flat, a V-notch is formed in its top portion to restrict the depth of water. Also, partitions may be provided between adjacent two weirs in the watercourse 101. When the partitions are added as discribed above, it prevents wind from passing through the upper space of the watercouse 101, thereby preventing the temperature of the upper space of the watercourse 101 from decreasing or evaporated water and preventing water vaper from being released from the closed space 105.

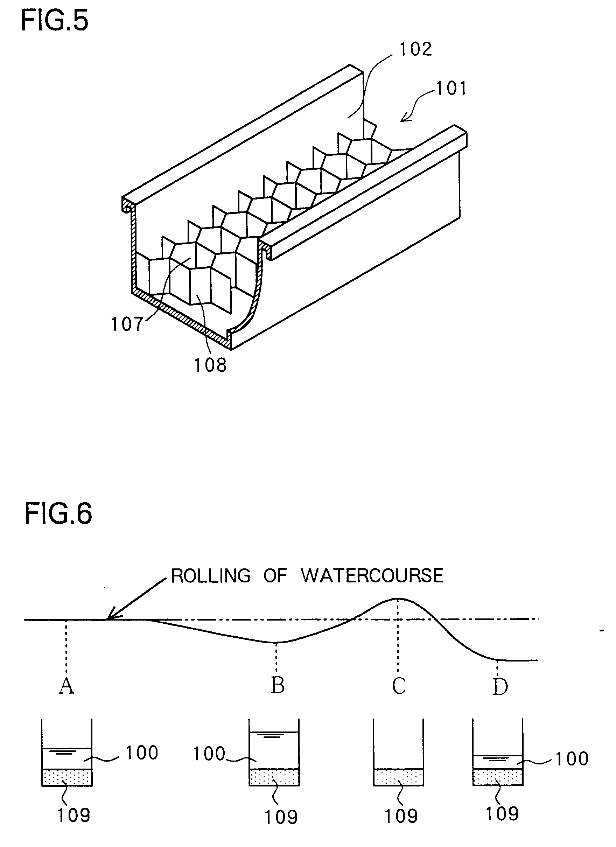

The distillation irrigation apparatus of the present invention is also applicable to the case where raw water is not continuously fed, by providing a water storage portion 107 in the watercourse 101 as shown in FIG. 5. The water storage portion 107 may be formed, for example, of continuously provided partitions 108 as shown in FIG. 5. In FIG. 5, the partitions 108 are arranged perpendicular to or at a certain angle to the side wall of the watercourse 101 to form a honeycombed water storage space. The water storage portion 107 may also be a collection of spaces each having a shape of cylinder or quadrangular prism.

As shown in FIG. 6, by laying a raw water transmitting material 109 in the watercourse 101, irrigation water can be continuously fed even when the distillation irrigation apparatus of the present invention is installed in a slope and a rolling land.

When the distillation irrigation apparatus is installed in a rolling land as shown in FIG. 6, the raw water 100 is present in the watercourse 101 at points A and B. However, at point C elevated above points A and B, the raw water 100 fails to be present in the watercourse 101. Even in such a case, the raw water transmitting material 109 absorbs due to capillarity the raw water 100 which is present at point B, and transmits the raw water 100 to point C and subsequent downstream points. The raw water transmitting material 109 may be of water absorptive woven or nonwoven sheet or water absorptive foams. Water absorptive foams include soft urethane foam, hard urethane foam, phenolic resin foam, and urea foam. Also, hay, and sponge made from rubber containing inorganic filler can be used. One or more than one of those materials may be formed into one or more layers. In addition, the water absorptive woven or nonwoven sheet may be combined with any of the water absorptive foams.

The watercourse 101 may be formed of the gutter member or may have a structure in which an impermeable film is laid in a ditch dug in land or which the ditch may be lined with concrete. Also, the watercourse 101 may be of any other forms so long as it is impermeable and water resistant.

In order to prevent transmission of sunlight through the cover 201 from decreasing due to water droplets or water film condensed on the interior surface 202 of the cover 201 (see FIGS. 2 and 3), an anti-clouding property may be added to the interior surface 202. The anti-clouding property is provided by adding a surface active agent into plastic from which the cover 201 is made. Examples of such a surface active agent include partially esterified compounds of polyhydric alcohol (e.g. solbitol, glycerol, pentaerythritol).

Alternatively, a surface active agent may be applied to the interior surface 202 of the cover 201. The surface active agent is preferably a coating-type droplet-formation preventing agent containing an inorganic hydrophilic colloidal substance and a hydrophilic organic compound as major components.

The shapes of the gutter member and the cover are not limited to those described above, but may have other forms insofar as they can achieve the objects of the present invention.

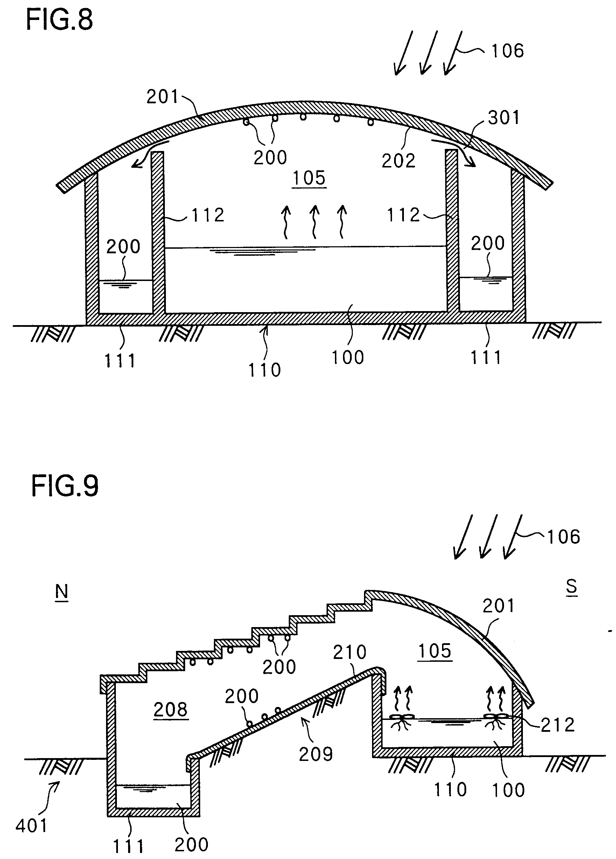

Another embodiment of the distillation irrigation apparatus according to the present invention will now be described with reference to FIG. 8. In FIG. 8, reference numeral 110 denotes a raw water tank which contains raw water 100 and whose top portion is covered with a light-transmissive covering material 201.

The raw water tank 110 may be of any impermeable water-resistant material. A swimming pool which is not used in winter may be used as the raw water tank 110. In order to enhance the distillation effect, at least the interior surface of the raw water tank 110 preferably has a color, usually black, which exhibits a good property of adsorbing heat of sunlight.

The covering material 201 is formed of a material similar to that of the heretofore mentioned cover 201.

In FIG. 8 is shown a water storage tank 111 which stores the distilled water 200 coming from inside the closed space 105. The water storage tank 111 is separated from the raw water tank 110 by a partition 112. The distilled water 200 produced on the interior surface 202 of the covering material 201 moves down the interior surface 202 to enter the water storage tank 111 through the water outlet portion 301.

The idea illustrated in FIG. 8 has, for example, the following advantage: a large amount of distilled water is produced in a large raw water tank, and the thus produced distilled water is transferred through appropriate means to an auxiliary water tank located distant from the raw water tank and stored therein. The stored distilled water can be used by a required amount at a required future time.

FIG. 9 shows an apparatus obtained by modifying the apparatus of FIG. 8. In FIG. 9, the raw water tank 110 is provided at the south side (denoted by letter S) so as to face the sunlight 106 while the water storage tank 111 is provided at the north side (denoted by letter N) so as not to face the sunlight 106. The north portion of the covering material 201 is hindered more in temperature rise than the south portion of the covering material 201, resulting in more condensate water being produced on the interior surface of the north portion. Accordingly, the air, which contains water vapor, within the south closed space 105 moves toward a north cold air reservoir 208 having a lower air temperature than the south closed space 105. The air flowing into the cold air reservoir is cooled, so that water vapor contained in the air condensates into the distilled water 200. In FIG. 9, the north portion of the covering material 201 has a step-like shape.

The stepped covering material 201 provides an increased area for producing the distilled water 200. Either the entirety or part of the covering material 201 may be stepped, but preferably, the north portion of the covering material 201 is stepped as shown in FIG. 9. Also, the covering material 201 may have a form of bellows in stead of the stepped shape. In this case, the distilled water 200 flows in the circumferential direction, so that downward flow of the distilled water 200 is effectively created.

Further, as shown in FIG. 9, if a slope 209 covered with an impermeable film 210 is formed on the north side of the raw water tank 110, water vapor will also condensate into the distilled water 200 on the surface of the impermeable film 210. That is, the area for producing the distilled water 200 is increased. Preferably, the slope 209 is of soil because the soil cools the impermeable film 210.

In the present invention, if aquatic plants 212 (FIG. 9) are grown in the raw water 100 of FIGS. 2, 3, 8, and 9, the sunlight 106 will promote transpiration of the aquatic plants 212, resulting in a promoted rise in the density of water vapor contained in the air within the closed space 105. Accordingly, the efficiency of producing the distilled water 200 improves, thereby further increasing yield of the distilled water 200.

Examples of the aquatic plants 212 include floating-leaf plants (e.g. Trapa bispinosa, Euryale ferox, Nelumbo nucifera (water lily), Brasenia schreberi, Hydrocharis dubia, and Potamogeton distinctus) and pleuston (e.g. Spirodela polyrhiza, Lemna aoukikusa, Lemna trisulce, Salvinia natans, and Azolla japonica). An adequate plant may be selected from among these plants in accordance with quality of the raw water 100.

It is known that these aquatic plants have a quite enhanced transpiring capability because of stomata located on the top face of their leaves and of an undeveloped cuticular layer.

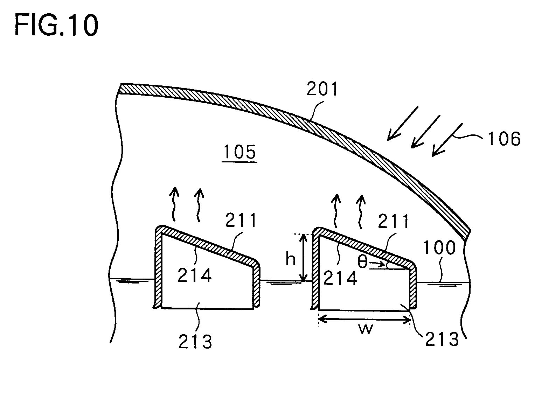

FIG. 10 shows an embodiment of a water-holding material 211 for increasing the water surface area of the raw water in order to increase yield of the distilled water. In FIG. 10, reference numeral 213 denotes a supporting block which projects the water-holding material 211 into the space 105 and whose top surface is sloped to form a slope surface 214. The water-holding material 211 has a sheet-like shape and covers the slope surface 214 such that its both ends are immersed in the raw water 100.

The raw water 100 is absorbed into the water-holding material 211, thereby increasing the area of evaporating the raw water 100, i.e. the effective water surface area of the raw water 100. Thus, a rise in the density of water vapor contained in the air within the closed space is promoted, resulting in an increased yield of the distilled water.

Heat of the sunlight can be collected more by coloring the water-holding material 211 black, interposing a black film between the water-holding material 211 and the slope surface 214, or coloring the slope surface 214 black, whereby the evaporation rate of the raw water 100 is improved. It is required that the height H of the supporting blocks 213 from the surface of raw water be equal to or smaller than the height to which the water-holding material 211 can raise raw water. The height h to which the raw water 100 can be absorbed is determined from a material from which the water-holding material 211 is manufactured. The thickness W of the supporting block 213 can be determined by determining an angle O which the slope surface 214 forms with the surface of the raw water 100. The angle O may be determined with the altitude of the sun taken into consideration.

In FIG. 10, the supporting block 213 is of water non-absorptive foam, wood or the like, and hence is floating on the raw water 100. Examples of the water non-absorptive foam include styrene foam and polyethylene foam.

Alternatively, the supporting block 213 may be of a concrete block, which does not float on the raw water 100. When a concrete block is used as the supporting block 213, it is preferable that a material having heat insulating performance is laid on the slope surface 214 so as to prevent the temperature of the raw water 100 absorbed into the water-holding material 211 from dropping. Examples of such a heat insulating material include straws, straw mat, water non-absorptive foam, and rock fiber. Also, a frame structure having a slope surface similar to that described above may replace the supporting block 213. The frame structure may be made of metallic bars, wooden bars, bamboo bars, or plastic bars, or a combination of them or a combination of these bars and cords or ropes.

When the substantial water surface area of the raw water 100 is increased as described above, a rise in the density of water vapor contained in the air within the closed space is promoted accordingly.

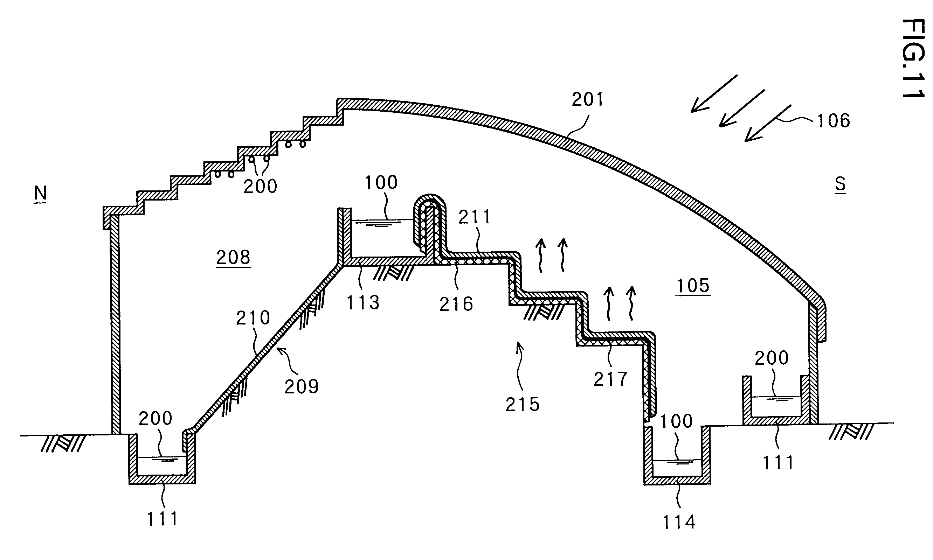

FIG. 11 shows an improved embodiment of the distillation irrigation apparatus of FIG. 9.

As shown in FIG. 11, an evaporation terrace 215 are provided which project the water-holding material 211 into the space 105. The evaporation terrace 215 is formed in tiers. A heat insulating material 216 such as cloth or straws is laid on an evaporation terrace 215, a black film 217 is laid on the heat insulating material 216, and the water-holding material 211 is laid on the black film 217. The heat insulating material 216 prevents a decrease in the temperature of the raw water 100 absorbed in the water-holding material 211 while the black film 217 collects heat of the sunlight 106 to enhance evaporation of the raw water 100 from the water-holding material 211. The evaporation terrace 215 may be of the same material as that of the supporting block 213 and may have a frame structure. In FIG. 11, the evaporation terrace 215 is formed of soil.

A raw water tank 113 is provided on the top tier of the evaporation terrace 215. One end of the water-holding material 211 is immersed into the raw water 100 contained in the raw water tank 113. The raw water 100 absorbed from the one end of the water-holding material 211 moves down the water-holding material 211 to be stored in a raw water tank 114 located at the bottom tier of the evaporation terrace 215. The evaporation terrace 215 increases the water surface area of the raw water 100 which moves down along the evaporation terrace 215. This increase in the water surface area promotes a rise in the density of water vapor contained in the air within the space, resulting in an increased yield of the distilled water 200 in the cold air reservoir 208. The raw water 100 stored in the raw water tank 114 may be pumped up to the raw water tank 113 located on the top tier of the evaporation terrace 215 at an adequate time.

The distilled water 200 is mostly produced on the north side and stored in the north-side water storage tank 111 while some distilled water 200 is also produced on the south side and stored in the south-side water storage tank 111.

The above-mentioned aquatic plants may be grown on part or the entire of the evaporation terrace 215.

An embodiment of the fourth means of the distillation irrigation apparatus according to the present invention will next be described in detail. Distilled water which is led out from inside the apparatus must be fed to the roots of plants to be grown through certain means. Preferable means for this end include: (1) means for moving the distilled water horizontally through the soil surface to the roots of plants; and (2) a water-holding material for feeding the distilled water to the roots of plants through an inner portion of the soil. These means may be used individually or in combination.

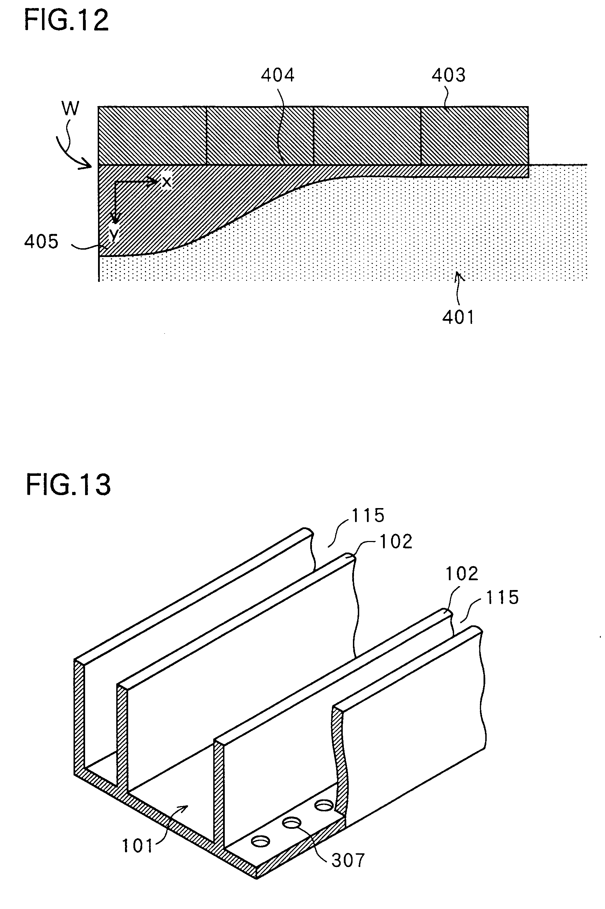

FIG. 12 shows an embodiment of means (1), in which the distilled water is horizontally moved through the soil surface to the roots of plants. Heavy members 403 are placed on the surface of the soil 401. The distilled water is fed between the bottom surfaces 404 of the heavy members 403 and the soil surface as indicated by arrow W. Because of the close contact between the surface of the soil 401 and the heavy members 403, the density of soil increases in a surface layer of the soil 401. As a result, the fed distilled water moves horizontally (in the direction of arrow x in FIG. 12) toward the roots of plants which are grown around the heavy members 403.

The surface soil under the bottom surface 404 of the heavy members 403 is not exposed to the sunlight and hence is held at a relatively low temperature (the daytime temperature of the surface soil under the heavy members 403 is always lower than that of the surface soil which does not bear the heavy members 403). This provides less water evaporation from the soil and maintains the soil in a moist state. The moist state expands in the x and y directions of FIG. 12 to form a moist area 405.

Since the distilled water moves horizontally along the soil surface, an irrigated area expands widely from an area initially fed with the distilled water. In addition, the movement of the distilled water in the surface soil layer does not require electric power and the like. In other words, the distilled water is efficiently fed to the roots of plants without using electric power or the like.

According to means (2), a water-holding material is laid in soil so as to feed the distilled water to the roots of plants. Preferably, an impermeable film is laid under the water-holding material.

This means enables a required amount of water to be fed to plants and enhances the water-holding capability of the soil. The impermeable film laid under the water-holding material prevents the distilled water from unnecessarily penetrating deep into the soil. In addition, the impermeable film prevents salt from coming up to the surface soil layer from a deep part of the soil.

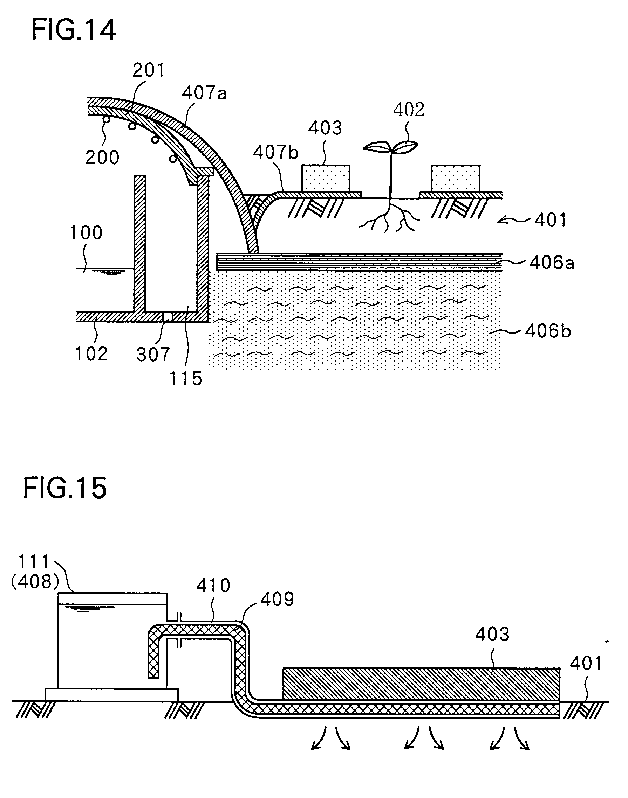

FIGS. 13 and 14 show apparatuses in which distilled water is fed to plants through an inner portion of the soil. A distilled water channel 115, into which produced distilled water enters, is formed on each side of the gutter member 102 in the longitudinal direction of the gutter member 102. Through-holes 307 are formed in the bottom of each distilled water channel 115 or at the lower portion of the side wall of each distilled water channel 115. The distilled water channel 115 and the through-holes 307 constitutes the third means.

In FIG. 14, reference numerals 406a and 406b denote water-holding materials for feeding the distilled water to the roots of plants through an inner portion of the soil.

In the present invention, the water-holding materials are preferably of a hydrophilic and/or water absorptive resin or of natural fiber.

Preferably, the water-holding material is nonwoven cloth which is made from a synthetic resin such as polyester and polyamide resins having a highly corrosion resistant property and which is treated to have a hydrophilic property. The nonwoven cloth can be formed by span bond spinning. Also, the nonwoven cloth may be formed of polyethylene fiber or polypropylene fiber whose surface is treated to have a hydrophilic property.

When natural fiber is used for making the water-holding material, straws (e.g. rice straws and wheat straws), hemp palm, hay, lint, bagasse, and peat moss may be used individually or in combination.

The water-holding material may have a form of sheet (as denoted by 406a in FIG. 14) or may be scattered in soil (as denoted by 406b in FIG. 14). Alternatively, sheets of water-holding material are laid in an upper soil layer while a water-holding material is scattered in a lower soil layer.

In FIG. 14, reference numeral 407a denotes an impermeable film which is provided on the cover 201 and extends into the soil 401.

In FIG. 14, the heavy members 403 are placed on the surface of the soil 401. In order to prevent evaporation of water vapor from the surface layer of the soil 401, the bottom surface 404, which contacts the surface of the soil 401, of the heavy member 403 is preferably impermeable. In order to attain the impermeable property, an impermeable film may be attached to the bottom surface of a permeable heavy member such as brick. Alternatively, waterproof mortar or a waterproof resin (waterproof paint, etc.) may be applied to the bottom surface. In addition, an impermeable block such as an impermeable concrete block may be used.

Alternatively, an impermeable film 407b may be interposed between the heavy members 403 and the surface of the soil 401.

The impermeable films 407a and 407b may be of polyvinyl chloride, polyester, low-density polyethylene, high-density polyethylene, and polypropylene.

Another embodiment of the fourth means will next be described with reference to FIG. 15. In the case where the distilled water produced by the apparatus described above is once stored in a water storage tank, and the stored distilled water is then transferred to the roots of plants being grown directly or via an auxiliary water tank, to which the distilled water is transferred from the water storage tank through appropriate means, the fourth means is embodied as described below. A tube 410 filled with a water-holding material 409 and having small holes is connected at one end thereof to the water storage tank 111 or an auxiliary water tank 408 and laid on the surface of the soil 401 such that the small holes are oriented downward, thereby transferring the distilled water to the roots of plants being grown. Alternatively, the tube 410 is connected at one end thereof to the water storage tank 111 or the auxiliary water tank 408 and buried in the soil 401 so as to transfer the distilled water to the roots of plants being grown. The plants absorb through capillarity a required amount of water transferred through the tube 410. If the heavy members 403 are placed on the surface off the soil 401, the transfer of water through the tube 410 will be promoted.

The tube 410 having small holes may be made of a thermoplastic synthetic resin such as polyvinyl chloride, polyethylene, polyolefin such as polypropylene, ethylene-vinyl acetate copolymer, polyester, and polyamide. These resins may be formed as film, sheet, or impermeable nonwoven cloth.

A method of making the tube 410 will now be described. An elongated sheet of a thermoplastic synthetic resin is formed. Small holes are formed in the sheet at predetermined intervals for releasing water therethrough. Next, the water-holding material 409 is attached to the sheet by bonding or heat sealing. Then, the thus prepared sheet is rolled and heat sealed at its side edges to form the tube 410.

When the distilled water is fed through the water-holding material 409 from the water storage tank 111 or the auxiliary water tank 408 to the roots of plants, the distilled water may be fed from one water storage tank 111 (or one auxiliary water tank 408) to a plurality of lands to be irrigated. If a plurality of lands to be irrigated are located distant to one another, the auxiliary water tank 408, to which the distilled water is transferred from the water storage tank 111, may be provided in each of the lands, so that the distilled water is fed through the water-holding material 409 from the auxiliary water tanks 408 to the corresponding lands to be irrigated. The present invention encompasses these modifications.

The distillation irrigation apparatus of the present invention may have a structure other than those disclosed above insofar as it can achieve the objects of the present invention.

Further, the distillation irrigation apparatus of the present invention may be of a fixed type, a unit type, a portable type, or of other types such as a compact type.

The distillation irrigation apparatus of the present invention generates, through distillation, water which does not contain foreign matter even from water which contains solid matter and the like. Thus, the apparatus efficiently feeds the distilled water to the roots of plants without presenting the problem involved in a conventional method that small holes in an irrigation tube are clogged with solid matter or the like. In addition, even raw water which contains salt is converted to salt-free water through distillation, so that plants fed with water from the apparatus do not suffer a salt problem. Further, since distillation uses sunlight and does not require any other form of power, the invention can be embodied in a region where electric power is not available, such as a desert region.

## Claims

1. A distillation irrigation apparatus comprising:
first means (102, 201) having a structure for increasing, by utilizing heat of the sunlight (106), the density of water vapor contained in the air within a substantially closed space (105) formed above raw water (100);
second means (201) having a structure for cooling the air to condense water vapor into distilled water (200);
third means (301) having a structure for leading the distilled water (200) to the outside; and
fourth means having a structure for feeding the distilled water (200) to the roots of plants (402) to be grown;
wherein the substantially closed space (105) of the first means (102, 201) is defined by the raw water (100) and a light-transmissive covering material (201) provided above the raw water (100),
and wherein the raw water (100) is present in a space formed of an impermeable member (102), and the light-transmissive covering material (201) provided above the raw water (100) is a cover for the impermeable member (102),
**characterized in that**
the third means (301) is defined by the shape of the impermeable member (102) and of the interior surface (202) of the covering material (201) defining a clearance for distilled water (200).

2. A distillation irrigation apparatus as defined in claim 1, characterized in that the impermeable member (102) is a gutter member defining a watercourse (101) for the raw water (100).

3. A distillation irrigation apparatus as defined in claim 1 or 2, characterized in that the clearance for distilled water (200) is defined between the top edge of each side wall of the impermeable member (102) and interior surface (202) of the cover (201) depending on ribs (104) of the impermeable member (102).

4. A distillation irrigation apparatus as defined in claim 1 or 2, characterized in that
said gutter member has a curl portion (304) formed by curving outwardly and/or inwardly the top edge portion of each side wall of the impermeable member (102),
said cover (201) has a curl portion (305) formed by curving inwardly each side edge portion, whereby said impermeable member (102) and said cover (201) have a structure which is elastic coupling between said curl portions (304, 305), and
the third means (301) comprises small holes (306) formed in said curl portion (305) of the cover (201).

5. A distillation irrigation apparatus as defined in any one of claims 1-4, characterized in that the third means (301) comprises clearances for distilled water between each of the side wall edges of the gutter member (102) and the cover (201) whereby at least both side wall edges of the gutter member (102) or at least both side edges of the cover (201) are formed in waves.

6. A distillation apparatus as defined in any one of claims 1-5, characterized in that a raw water transmitting material (109) is laying in a watercourse formed of an impermeable member (102).

7. A distillation irrigation apparatus as defined in any one of claims 1-6, characterized in that said space formed of an impermeable member (102) has at least one structure selected from the following (1) ∼ (4);
(1) weirs which its top portion is flat;
(2) weirs which its top portion is a V-notch form,
(3) weirs which its top portion is flat and partitions between adjacent two weirs,
and
(4) weirs which its top portion is a V-notch form and partitions between adjacent two weirs.

8. A distillation irrigation apparatus as defined in any one of claims 2-7, characterized by water storage portions (107) which are formed by partitions which are arranged perpendicular to or at a certain angle to the side wall of said watercourse (101) to form honeycombed spaces, or by spaces each having a shape of a cylinder or of a quadrangular prism.

9. A distillation irrigation apparatus as defined in claim 1, characterized in that the impermeable member (102) is a raw water tank (110) in which the raw water (100) is present quietly.

10. A distillation irrigation apparatus as defined in any one of claims 1-9, characterized in that the south side of the substantially closed space of the first means (110, 201) is defined by the raw water (100) and a light-transmissive covering material (201) which is provided above the raw water (100), and
the north side of said substantially closed space comprises the second means (201) for increasing yield of the distilled water (200).

11. A distillation irrigation apparatus according to claim 10, wherein the means for increasing yield of the distilled water (200) comprises the north portion of the covering material (201) which has a step-like shape or bellows form, and an impermeable film (210) covering the north side soil.

12. A distillation irrigation apparatus as defined in any one of claims 1-11, characterized in that the second means (201) comprises means for increasing yield of the distilled water (200), and
the means for increasing yield of the distilled water (200) comprises an aquatic plant (212) which grows in the raw water (100).

13. A distillation irrigation apparatus as defined in any one of claims 1-11, characterized in that the second means (201) comprises means for increasing yield of the distilled water (200), and
the means for increasing yield of the distilled water (200) comprises a water-holding material (211) at least a part of which is immersed in the raw water (100) and which is projected into the substantially closed space (105) so as to increase the contact area between the air and the raw water (100).

14. A distillation irrigation apparatus as defined in any one of claims 1-13, characterized in that the third means (301) comprises a water outlet portion for leading the distilled water (200) to the outside while the fourth means comprises means for horizontally moving the distilled water (200) through a soil surface by placing the heavy members (403) on the surface of the soil (401) so as to feed the distilled water (200) to the roots of plants (402).

15. A distillation irrigation apparatus as defined in any one of claims 1-14, characterized in that it further comprises a water outlet portion for leading the distilled water (200) to the outside while the fourth means comprises means (406a, 406b) for feeding through an inner part of soil (401) the distilled water (200) to the roots of plants (402).

16. A distillation irrigation apparatus as defined in any one of claims 1-15, characterized in that it further comprises a water storage tank (111) for storing the distilled water (200) while the fourth means comprises a water-holding material (409) for feeding the distilled water (200) from the water storage tank (111) to the roots of plants (402).

17. A distillation irrigation apparatus as defined in any one of claims 1-15, characterized in that it further comprises a water storage tank (111) for storing the distilled water (200) and an auxiliary water tank for storing the distilled water (200) transferred from the water storage tank (111) while the fourth means comprises a water-holding material (409) for feeding the distilled water (200) from the auxiliary water tank to the roots of plants (402).

## Patentansprüche

1. Destillationsbewässerungsvorrichtung, umfassend:
eine erste Einrichtung (102, 201), die so aufgebaut ist,
daß sie unter Ausnutzung der Wärme des Sonnenlichtes (106) die Dichte des in der Luft enthaltenen Wasserdampfes in einem im wesentlichen geschlossenen Raum (105) über dem Rohwasser (100) erhöht;
eine zweite Einrichtung (201), die so aufgebaut ist, daß sie die Luft abkühlt, um Wasserdampf zu destilliertem Wasser (200) zu kondensieren;
eine dritte Einrichtung (301), die so aufgebaut ist, daß sie das destillierte Wasser (200) nach außen leitet; und eine vierte Einrichtung, die so aufgebaut ist, daß sie das destillierte Wasser (200) zu den Wurzeln der zu ziehenden Pflanzen (402) leitet;
wobei der im wesentlichen geschlossene Raum (105) der ersten Einrichtung (102, 201) durch das Rohwasser (100) und ein lichtdurchlässiges Abdeckmaterial (201) über dem Rohwasser (100) begrenzt wird,
und wobei sich das Rohwasser (100) in einem aus einem undurchlässigen Element (102) gebildeten Raum befindet, und das lichtdurchlässige Abdeckmaterial (201) über dem Rohwasser (100) eine Abdeckung für das undurchlässige Element (102) darstellt,
dadurch gekennzeichnet, daß
die dritte Einrichtung (301) durch die Form des undurchlässigen Elements (102) und der Innenseite (202) des Abdeckmaterials (201) begrenzt wird, die einen Zwischenraum für destilliertes Wasser (200) aufweist.

2. Destillationsbewässerungsvorrichtung nach Anspruch 1, dadurch gekennzeichnet, daß das undurchlässige Element (102) eine Rinne ist, die einen Wasserlauf (101) für das Rohwasser (100) begrenzt.

3. Destillationsbewässerungsvorrichtung nach Anspruch 1 oder 2, dadurch gekennzeichnet, daß der Zwischenraum für destilliertes Wasser (200) ausgebildet ist zwischen der Oberkante jeder Seitenwand des undurchlässigen Elements (102) und der Innenseite (202) der Abdeckung (201) in Abhängigkeit von Rippen (104) des undurchlässigen Elements (102).

4. Destillationsbewässerungsvorrichtung nach Anspruch 1 oder 2, dadurch gekennzeichnet, daß
die Rinne eine Bördelung (304) aufweist, die dadurch hergestellt wird, daß die Oberkante jeder Seitenwand des undurchlässigen Elements (102) nach außen und/oder nach innen gebogen wird,
die Abdeckung (201) eine Bördelung (305) aufweist, die dadurch hergestellt wird, daß jede Seitenkante nach innen gebogen wird, so daß das undurchlässige Element (102) und die Abdeckung (201) einen Aufbau besitzen, der eine elastische Verbindung zwischen den Bördelungen (304, 305) darstellt, und
die dritte Einrichtung (301) kleine Löcher (306) aufweist, die in der Bördelung (305) der Abdeckung (201) ausgebildet sind.

5. Destillationsbewässerungsvorrichtung nach einem der Ansprüche 1-4, dadurch gekennzeichnet, daß die dritte Einrichtung (301) Zwischenräume für destilliertes Wasser zwischen jeder der Seitenwandkanten der Rinne (102) und der Abdeckung (201) umfaßt, so daß wenigstens beide Seitenwandkanten der Rinne (102) oder wenigstens beide Seitenkanten der Abdeckung (201) wellenförmig ausgebildet sind.

6. Destillationsbewässerungsvorrichtung nach einem der Ansprüche 1-5, dadurch gekennzeichnet, daß ein für Rohwasser durchlässiges Material (109) in einem aus einem undurchlässigen Element (102) gebildeten Wasserlauf liegt.

7. Destillationsbewässerungsvorrichtung nach einem der Ansprüche 1-6, dadurch gekennzeichnet, daß der aus einem undurchlässigen Element (102) gebildete Raum wenigstens einen Aufbau besitzt, der ausgewählt ist aus den folgenden Möglichkeiten (1) - (4):
(1) Wehre, deren oberer Abschnitt flach ist;
(2) Wehre, deren oberer Abschnitt die Form einer Spitzkerbe besitzt;
(3) Wehre, deren oberer Abschnitt flach ist, und die zwischen zwei benachbarten Wehren Trennwände aufweisen; und
(4) Wehre, deren oberer Abschnitt die Form einer Spitzkerbe besitzt, und die zwischen zwei benachbarten Wehren Trennwände aufweisen.

8. Destillationsbewässerungsvorrichtung nach einem der Ansprüche 2-7, gekennzeichnet durch Wasserspeicherabschnitte (107), die durch Trennwände gebildet werden, die senkrecht oder in einem bestimmten Winkel zu der Seitenwand des Wasserlaufes (101) angeordnet sind, um wabenartige Räume zu bilden, oder durch Räume, die jeweils die Form eines Zylinders oder eines vierseitigen Prismas aufweisen.

9. Destillationsbewässerungsvorrichtung nach Anspruch 1, dadurch gekennzeichnet, daß das undurchlässige Element (102) ein Rohwassertank (110) ist, in dem das Rohwasser (100) steht.

10. Destillationsbewässerungsvorrichtung nach einem der Ansprüche 1-9, dadurch gekennzeichnet, daß die Südseite des im wesentlichen geschlossenen Raumes der ersten Einrichtung (110, 201) durch das Rohwasser (100) und ein lichtdurchlässiges Abdeckmaterial (201) begrenzt wird, das über dem Rohwasser (100) vorgesehen ist, und
die Nordseite des im wesentlichen geschlossenen Raumes die zweite Einrichtung (201) zur Erhöhung des Ertrages an destilliertem Wasser (200) umfaßt.

11. Destillationsbewässerungsvorrichtung nach Anspruch 10, bei der die Einrichtung zur Erhöhung des Ertrages an destilliertem Wasser (200) den nördlichen Abschnitt des Abdeckmaterials (201) umfaßt, der stufenartig oder in Form eines Faltenbalges ausgebildet ist, und eine undurchlässige Folie (210), die den Boden auf der Nordseite bedeckt.

12. Destillationsbewässerungsvorrichtung nach einem der Ansprüche 1-11, dadurch gekennzeichnet, daß die zweite Einrichtung (201) eine Einrichtung zur Erhöhung des Ertrages an destilliertem Wasser (200) umfaßt, und
die Einrichtung zur Erhöhung des Ertrages an destilliertem Wasser (200) eine Wasserpflanze (212) umfaßt, die in dem Rohwasser (100) wächst.

13. Destillationsbewässerungsvorrichtung nach einem der Ansprüche 1-11, dadurch gekennzeichnet, daß die zweite Einrichtung (201) eine Einrichtung zur Erhöhung des Ertrages an destilliertem Wasser (200) umfaßt, und
die Einrichtung zur Erhöhung des Ertrages an destilliertem Wasser (200) ein wasserhaltendes Material (211) umfaßt, das wenigstens zum Teil in das Rohwasser (100) eingetaucht ist, und das in den im wesentlichen geschlossenen Raum (105) ragt, so daß die Kontaktfläche zwischen der Luft und dem Rohwasser (100) erhöht wird.

14. Destillationsbewässerungsvorrichtung nach einem der Ansprüche 1-13, dadurch gekennzeichnet, daß die dritte Einrichtung (301) einen Wasserauslaß umfaßt, der das destillierte Wasser (200) nach außen leitet, während die vierte Einrichtung eine Einrichtung umfaßt, die das destillierte Wasser (200) horizontal durch eine Bodenoberfläche bewegt, indem sie die schweren Elemente (403) auf die Oberfläche des Bodens (401) legt, so daß das destillierte Wasser (200) zu den Wurzeln der Pflanzen (402) befördert wird.

15. Destillationsbewässerungsvorrichtung nach einem der Ansprüche 1-14, dadurch gekennzeichnet, daß sie des weiteren einen Wasserauslaß umfaßt, der das destillierte Wasser (200) nach außen leitet, während die vierte Einrichtung eine Einrichtung (406a, 406b) umfaßt, die das destillierte Wasser (200) durch einen inneren Teil des Bodens (401) zu den Wurzeln der Pflanzen (402) leitet.

16. Destillationsbewässerungsvorrichtung nach einem der Ansprüche 1-15, dadurch gekennzeichnet, daß sie des weiteren einen Wasserspeichertank (111) zum Speichern des destillierten Wassers (200) umfaßt, während die vierte Einrichtung ein wasserhaltendes Material (409) umfaßt, um das destillierte Wasser (200) von dem Wasserspeichertank (111) zu den Wurzeln der Pflanzen (402) zu leiten.

17. Destillationsbewässerungsvorrichtung nach einem der Ansprüche 1-15, dadurch gekennzeichnet, daß sie des weiteren einen Wasserspeichertank (111) zum Speichern des destillierten Wassers (200) und einen zusätzlichen Wassertank zum Speichern des von dem Wasserspeichertank (111) hergeleiteten Wassers umfaßt, während die vierte Einrichtung ein wasserhaltendes Material (409) umfaßt, um das destillierte Wasser (200) von dem zusätzlichen Wassertank zu den Wurzeln der Pflanzen (402) zu leiten.

## Revendications

1. Appareil de distillation et d'irrigation comportant :
un premier moyen (102, 201) ayant une structure pour augmenter, en utilisant la chaleur de la lumière du soleil (106), la densité de la vapeur d'eau contenue dans l'air dans un espace sensiblement fermé (105) formé au-dessus de l'eau brute (100) ;
un deuxième moyen (201) ayant une structure pour refroidir l'air afin de condenser la vapeur d'eau en eau distillée (200) ;
un troisième moyen (301) ayant une structure pour mener l'eau distillée (200) vers l'extérieur ; et
un quatrième moyen ayant une structure pour amener l'eau distillée (200) aux racines de plantes (402) à faire pousser ;
où l'espace sensiblement fermé (105) du premier moyen (102, 201) est défini par l'eau brute (100) et un matériau couvrant (201) transmettant la lumière est prévu au-dessus de l'eau brute (100),
et où l'eau brute (100) est présente dans un espace formé par un élément imperméable (102), et le matériau couvrant (201) transmettant la lumière prévu au-dessus de l'eau brute (100) constitue un recouvrement pour l'élément imperméable (102),
**caractérisé en ce que**
le troisième moyen (301) est défini par la forme de l'élément imperméable (102) et par la surface intérieure (202) du matériau couvrant (201) définissant un espace intermédiaire pour l'eau distillée (200).

2. Appareil de distillation et d'irrigation tel que défini dans la revendication 1, caractérisé en ce que l'élément imperméable (102) est un élément formant rigole de coulée définissant une course d'eau (101) pour l'eau brute (100).

3. Appareil de distillation et d'irrigation selon la revendication 1 ou 2, caractérisé en ce que l'espace intermédiaire pour l'eau distillée (200) est défini entre le bord supérieur de chaque paroi latérale de l'élément imperméable (102) et la surface intérieure (202) du couvercle (201) s'étendant vers le bas sur des nervures (104) de l'élément imperméable (102).

4. Appareil de distillation et d'irrigation tel que défini dans la revendication 1 ou 2, caractérisé en ce que ledit élément formant rigole de coulée a une partie roulée (304) formée en courbant vers l'extérieur et/ou vers l'intérieur la partie de bord supérieur de chaque paroi latérale de l'élément imperméable (102),
ledit couvercle (201) a une partie roulée (305) formée en courbant vers l'intérieur chaque partie de bord latérale par quoi ledit élément imperméable (102) et ledit couvercle (201) ont une structure qui est un accouplement élastique entre lesdites parties roulées (304, 305) et
le troisième moyen (301) comprend de petits trous (306) formés dans ladite partie roulée (305) du couvercle (201).

5. Appareil de distillation et d'irrigation tel que défini dans l'une des revendications 1-4, caractérisé en ce que le troisième moyen (301) comprend des espaces intermédiaires pour l'eau distillée entre chacun des bords de paroi latérale de l'élément formant rigole de coulée (102) et du couvercle (201) par quoi au moins les deux bords de paroi latérale de l'élément formant rigole de coulée (102) ou au moins les deux bords latéraux du couvercle (201) sont en forme d'ondes.

6. Appareil de distillation tel que défini dans l'une des revendications 1-5, caractérisé en ce que le matériau de transmission d'eau brute (109) se situe dans une course d'eau formée par un élément imperméable (102).

7. Appareil de distillation et d'irrigation tel que défini dans l'une des revendications 1-6, caractérisé en ce que ledit espace formé par un élément imperméable (102) a au moins une structure choisie parmi les suivantes (1) - (4) ;
(1) déversoir dont la partie supérieure est plate ;
(2) déversoir dont la partie supérieure a une forme d'encoche en V,
(3) déversoir dont la partie supérieure est plate et où des divisions se trouvent entre deux déversoirs adjacents, et
(4) déversoir dont la partie supérieure a une forme d'encoche en V et où des divisions sont prévues entre deux déversoirs adjacents.

8. Appareil de distillation et d'irrigation tel que défini dans l'une des revendications 2-7, caractérisé par des portions de stockage d'eau (107) qui sont formées par des divisions qui sont agencées perpendiculairement à ou suivant un certain angle à la paroi latérale de ladite course d'eau (101) pour former des espaces alvéolés ou par des espaces ayant chacun une forme de cylindre ou de prisme quadrangulaire.

9. Appareil de distillation et d'irrigation selon la revendication 1, caractérisé en ce que l'élément imperméable (102) est un réservoir d'eau brute (110) dans lequel l'eau brute (100) est présente calmement.

10. Appareil de distillation et d'irrigation tel que défini dans l'une des revendications 1-9, caractérisé en ce que le côté sud de l'espace sensiblement fermé du premier moyen (110, 201) est défini par l'eau brute (100) et un matériau de recouvrement (201) transmettant la lumière qui est prévu au-dessus de l'eau brute (100), et
le côté nord dudit espace sensiblement fermé comprend le deuxième moyen (201) pour augmenter le rendement de l'eau distillée (200).

11. Appareil de distillation et d'irrigation selon la revendication 10, où le moyen pour augmenter le rendement de l'eau distillée (200) comprend la partie nord du matériau de recouvrement (201) qui a une forme à gradins ou une forme de soufflet, et un film imperméable (210) couvrant le sol côté nord.

12. Appareil de distillation et d'irrigation tel que défini dans l'une des revendications 1-11, caractérisé en ce que le deuxième moyen (201) comprend un moyen pour augmenter le rendement de l'eau distillée (200), et
le moyen pour augmenter le rendement de l'eau distillée (200) comprend une plante aquatique (212) qui pousse dans l'eau brute (100).

13. Appareil de distillation et d'irrigation tel que défini dans l'une des revendications 1-11, caractérisé en ce que le deuxième moyen (201) comprend un moyen pour augmenter le rendement de l'eau distillée (200), et
le moyen pour augmenter le rendement de l'eau distillée (200) comprend un matériau retenant l'eau (211) dont au moins une partie est immergée dans l'eau brute (100) et qui fait saillie dans l'espace sensiblement fermé (105) de façon à augmenter la zone de contact entre l'air et l'eau brute (100).

14. Appareil de distillation et d'irrigation tel que défini dans l'une des revendications 1-13, caractérisé en ce que le troisième moyen (301) comprend une partie de sortie d'eau pour mener l'eau distillée (200) vers l'extérieur tandis que le quatrième moyen comprend un moyen pour déplacer horizontalement l'eau distillée (200) à travers une surface de sol en plaçant les éléments lourds (403) sur la surface de sol (401) de façon à amener l'eau distillée (200) aux racines des plantes (402).

15. Appareil de distillation et d'irrigation tel que défini dans l'une des revendications 1-14, caractérisé en ce qu'il comporte en outre une partie de sortie d'eau pour mener l'eau distillée (200) vers l'extérieur tandis que le quatrième moyen comprend un moyen (406a, 406b) pour amener à travers une partie intérieure du sol (401) l'eau distillée (200) aux racines des plantes (402).

16. Appareil de distillation et d'irrigation tel que défini dans l'une des revendications 1-15, caractérisé en ce qu'il comporte en outre un réservoir de stockage d'eau (111) pour stocker l'eau distillée (200) tandis que le quatrième moyen comprend un matériau retenant l'eau (409) pour amener l'eau distillée (200) du réservoir de stockage d'eau (111) aux racines des plantes (402).

17. Appareil de distillation et d'irrigation tel que défini dans l'une des revendications 1-15, caractérisé en ce qu'il comporte en outre un réservoir de stockage d'eau (111) pour stocker l'eau distillée (200) et un réservoir d'eau auxiliaire pour stocker l'eau distillée (200) transférée du réservoir de stockage d'eau (111) tandis que le quatrième moyen comprend un matériau retenant l'eau (409) pour amener l'eau distillée (200) du réservoir d'eau auxiliaire aux racines des plantes (402).
